(19) Europäisches Patentamt
European Patent Office
Office européen des brevets

(11) **EP 0 616 706 B1**

(12) **EUROPÄISCHE PATENTSCHRIFT**

(45) Veröffentlichungstag und Bekanntmachung des Hinweises auf die Patenterteilung:
**06.03.1996 Patentblatt 1996/10**

(21) Anmeldenummer: **92923695.8**

(22) Anmeldetag: **04.12.1992**

(51) Int Cl.[6]: **G05B 13/02**, G06F 15/18

(86) Internationale Anmeldenummer:
**PCT/DE92/01017**

(87) Internationale Veröffentlichungsnummer:
**WO 93/12475 (24.06.1993 Gazette 1993/15)**

(54) **VERFAHREN ZUR OPTIMIERUNG VON STEUERPARAMETERN FÜR EIN SYSTEM, DAS IN ABHÄNGIGKEIT DER STEUERPARAMETER EIN IST-VERHALTEN AUFWEIST**

PROCESS FOR OPTIMISING CONTROL PARAMETERS FOR A SYSTEM HAVING AN ACTUAL BEHAVIOUR DEPENDING ON THE CONTROL PARAMETERS

PROCEDE D'OPTIMISATION DE PARAMETRES DE COMMANDE POUR UN SYSTEME AYANT UN COMPORTEMENT REEL DEPENDANT DES PARAMETRES DE COMMANDE

(84) Benannte Vertragsstaaten:
**CH DE FR IT NL**

(30) Priorität: **09.12.1991 DE 4140550**

(43) Veröffentlichungstag der Anmeldung:
**28.09.1994 Patentblatt 1994/39**

(73) Patentinhaber: **SIEMENS AKTIENGESELLSCHAFT
D-80333 München (DE)**

(72) Erfinder:
• **NEUBAUER, Werner
D-80935 München (DE)**
• **BOCIONEK, Siegfried
D-81247 München (DE)**
• **MÖLLER, Marcus
D-81739 München (DE)**
• **JOPPICH, Martin
D-82008 Unterhaching (DE)**

(56) Entgegenhaltungen:
EP-A- 0 445 729          EP-A- 0 508 202
US-A- 4 990 838

• **PATENT ABSTRACTS OF JAPAN, unexamined applications, P Sektion, Band 16, Nr. 436, 11. September 1992 THE PATENT OFFICE JAPANESE GOVERNMENT Seite 38 P 1419**
• **PATENT ABSTRACTS OF JAPAN, unexamined applications, P Sektion, Band 16, Nr. 65, 18. Februar 1992 THE PATENT OFFICE JAPANESE GOVERNMENT Seite 19 P 1313**

**Beschreibung**

In modernen Fertigungseinrichtungen werden häufig aus Kosten , Zeit- und Personalersparnisgründen Fertigungsanlagen eingesetzt, die sehr komplex sind und deren korrekte Funktionsweise von einer Vielzahl von Steuerparametern abhängt. Dabei ist es besonders wichtig, daß in Abhängigkeit von der Zeit solche Steuerparameter zur Verfügung stehen, die in Bezug auf das sollverhalten eines solchen Systems ein korrektes Ist-Verhalten bewirken. Das heißt, daß die Parameter so beschaffen sein müssen, daß das Ist-Verhalten des Systems dem Sollverhalten möglichst genau entspricht.

Einige Beispiele für solche Systeme sind: -Roboterarme, die ein Werkzeug, wie z.B. einen Laser oder ein Entgratungswerkzeug bewegen, welche entlang einer bestimmten Konturlinie eines Werkstücks geführt werden sollen. -Heizsysteme, welche einem Werkstück ein bestimmtes Temperaturprofil aufprägen sollen.

Um derartige Systeme regeln zu können, muß man ihr Übertragungsverhalten sehr genau kennen und beschreiben. Man kann versuchen für die Regelung das Übertragungsverhalten der Systeme in Differentialgleichungen höherer Ordnung zu erfassen. Bei mechanischen Systemen, wie einem Roboterarm z.B., würde die Differentialgleichung durch das Gewicht des Werkzeugs, das Gewicht der einzelnen Arme, die Trägheitsmomente, die bei Bewegungen auftreten, die Drehmomente der Motoren und die Art und Weise, wie die einzelnen Gelenke und mit ihnen verbundenen Teilstücke des Roboterarmes positioniert sind, beeinflußt. Man sieht schon daraus, daß sich mit den bekannten

Größen eine sehr komplexe Differentialgleichung ergeben muß. Erschwerend kommt hinzu, daß diese Systeme, wie z.B. ein Roboterarm Nichtlinearitäten aufweisen. Diese Nichtlinearitäten bestehen z.B. im Spiel in den Gelenken, im Spiel in den Übersetzungsgetrieben und in Positionierungsungenauigkeiten der Servos. Diese Größen sind nicht vorhersehbar und lassen sich deshalb auch nicht beschreiben.

In Analogie dazu sind bei Heizungssteuerungen andere Nichtlinearitäten denkbar, wie z.B. der Temperaturleitkoeffizient der Isolation, das unterschiedliche Reflexionsverhalten des Heizgutes, Konvektionseinflüsse, unterschiedliche Umgebungstemperatur usw..

Um solche teueren Investitionsgüter, wie es z.B. Roboter sind, möglichst lange im Produktionsprozeß belassen zu können, gibt es Methoden, die Parameter dieser Systeme zu bestimmen, ohne dafür einen Roboter zu verwenden. Für Roboterarme, die z.B. Werkzeuge führen, müssen Koordinaten vorgegeben werden, entlang welchen der Roboter dieses Werkzeug führen soll. In zeitlicher Abfolge dieser Koordinaten ergibt sich dann eine Bahntrajektorie. Eine Methode solche x-y-Koordinaten zu bestimmen ist z.B. die, durch Simulation eines Roboterarmes. Dabei wird in einem Rechner das Modell eines Rototerarmes beschrieben, das alle bekannten Größen dieses Roboterarmes enthält. Diese Beschreibung beinhaltet z.B. die Geometrie, das kinematische und das dynamische Verhalten des Roboters, der Werkstücke, der Maschinen und auch das Verhalten der Sensoren, soweit sie für die Simulation relevant sind.

Besonders wichtig ist in diesem Zusammehang auch, daß bei solchen Simulations-Modellen auch das Verhalten der Regelung des Roboters berücksichtigt wird.

Diesem Modell werden nun Steuerparameter im Falle eines Roboterarmes x-y - und eventuell auch z-Koordinaten einer Bahntrajektorie zugeführt. Aus der Simulation ergibt sich dann das Ist-Verhalten des Roboterarmes, das nun mit dem bekannten Soll-Verhalten, nämlich den Koordinaten der Trajektorie verglichen werden kann. Anhand dieses Vergleichs kann man die Steuerparameter, d.h. die Koordinaten für dieses Robotermodell optimieren.

Mit den so am Modell optimierten Steuerparametern kann man nun den realen Roboter ansteuern. Aufgrund der zuvor beschriebenen Nichtlinearitäten wird er nicht das Soll-Verhalten aufweisen, d.h. die Soll-Trajektorie wird mehr oder weniger genau durch den Roboterarm beschrieben. Nun muß der Mensch in zeitaufwendigem Verfahren die Koordinaten, d.h. die Steuerparameter für den realen Roboter optimieren. Dies geschieht beim Laserschneiden und Entgraten z.B. auch unter Aufwand von großem Materialeinsatz, da reale Werk stücke bearbeitet werden. Ein anderes Verfahren Roboterarmen Bahntrajektorien beizubringen ist, direkt im teach-in-Verfahren, indem man Punkt für Punkt einzelne Koordinaten die auf der Trajektorie liegen, die der Roboter im Fertigungsprozeß beschreiben soll, anfährt und in dem der Mensch nachdem alle Koordinatenpunte eingegeben sind, auch das dynamische Verhalten optimiert und die Steuerparameter entsprechend vorgibt.

Von großem Vorteil wäre es, wenn dieser Schritt der Steuerparameter-Optimierung auch automatisiert werden könnte. Gängige Methoden, die versuchen diesen Optimierungsprozeß zu beschleunigen, haben eine Verbesserung der Regelung des Roboters zum Ziel.

Zwei der wichtigsten Techniken sind die "Nonlinear Control" Theorie und die "Computed Torque" Methode. Zu der ersten Gruppe gehört beschreibend Casareo und Mariano /CAS84/ und Spong /Spo 86/ eine linearisierte Rückführung, Freund /Fre 82/ schlägt eine nichtlineare Transformation für die Entkopplung der Nichtlinearitäten der Roboterdynamik vor. Bei ihnen allen wird vorausgesetzt, daß die Trägheitsmatrix vollständig bekannt ist. Deshalb ist für diese Techniken ein sehr genaues Robotermodell notwendig.

Wenn ein Modell der Roboterdynamik in Echtzeit entlang einer gewünschten Trajektorie berechnet werden kann, dann können die Antriebsmomente für jedes Gelenk bei jedem von der Robotersteuerung übergebenen Befehl neu ausgerechnet werden. Dies wird als "Computed Torque" oder "Inverse Dynamics" Methode bezeichnet (/Hol80/, /Luh80/). Bedingt durch die schlechte Modellierbarkeit können Fehler die durch Spiel und Reibung in den Gelenken, unterschiedliche Zuladung oder Trägheitseffekte verursacht werden, nicht vermieden werden /Gil83/.

Eine weitere Technik ist die sog. "Model Reference Adaptive Control" (/Hor80/, /Dub79/, /Bal83/, /Koi83/, /Lei84/). Bei diesem adaptiven Verfahren wird eine Regelung derart vorgenommen, daß die Differenz zwischen dem mit einem Modell (gedämpftes System zweiter Ordnung) berechneten Ist-Verhalten und dem aktuellen Ist-Verhalten des Roboters minimiert wird. Aufgrund der Tatsache des Vergleichs mit einem Modell und nicht mit der gewünschten Trajektorie müssen Fehler auftreten, wenn das Modell nicht sehr genau ist.

Um diese Fehler zu reduzieren haben Arimoto und andere (/Ari84/, /Ari85/), eine neue, "Learning Control" genannte Methode vorgestellt. In Anlehnung an diese Technik bestimmen Potthast und Tio /Pot91/ die Parameter eines inversen linearen Systemmodells basierend auf dem Vergleich zwischen dem Eingangs- und Ausgangssignal einer CNC-Maschine. Anschlissend wird unter Verwendung des inversen Systemmodells das CNC-Programm (Eingangssignal, Steuerparameter) vor der Ausführung so modifiziert, daß das Ausgangssignal mit der gewünschten Trajektorie übereinstimmt. Die Änderung der ursprünglichen Steuerparameter muß bei diesem Verfahren vor jeder Ausführung durchgeführt werden. Fehler im Systemmodell führen auch zu Abweichungen vom Soll-Verhalten.

Die Berücksichtigung von Nichtlinearitäten im Modell wird als geeigneter Schritt in Richtung zur Verbesserung des Systemmodells angesehen. D. Psaltis et al. (/Psa87/, /Psa88/) verwenden dazu ein mehrlagiges neuronales Netzwerk, welches on-line trainiert werden kann.

W.T.Miller III u.a. (/Mil87/, /Mil89/, /Mil90/) verwenden ein nur für bestimmte Regionen des Arbeitsraumes gültiges, angenähertes Modell der Roboterdynamik, für das ein neuronales Netz trainiert wird. Die angewandte Lernregel ist ähnlich der Widrow-Hoff Lernregel für adaptive Elemente.

Die Schrift EP-AI 0 445 729 offenbart ein adaptives Regelungs- und Kontrollsystem, welches Effekte, die bei Parameteränderungen des zu regelnden Objekts auftreten, unterdrückt um die Robustheit des Systems zu verbessern. Dazu wird in einem ersten Schritt ein Fuzzy-Referenzmodell des zu regelnden Objektes gelernt. In dem folgenden Schritt, dem Betriebsfall, werden in einer ersten Regelschleife (minor loop) die Ausgangsdaten des Objektes mit den Daten des Fuzzy-Modelles verglichen und das Ergebnis des Vergleiches wieder dem Fuzzy-Modell zugeführt zur Adaption. Weiterhin wird das Ergebnis des Vergleiches in einer zweiten Regelschleife (control-loop) zur Regelung des Objektes verwendet.

Weitere Verfahren zur Optimierunmg von Steuerparametern für ein System, das in Abhängigkeit der Steuerparameter ein Ist-Verhalten aufweist, die insbesondere nicht die Regelung des Systems betreffen, sind nicht bekannt.

Die der Erfindung zugrundeliegende Aufgabe besteht darin, ein Verfahren zur Optimierung von Steuerparametern für ein System, das in Abhängigkeit dieser Steuerparameter ein Ist-Verhalten aufweist, anzugeben. Diese Aufgabe wird gemäß den Merkmalen des Patentanspruchs 1 gelöst.

Ein besonderer Vorteil des erfindungsgemäßen Verfahrens besteht darin, daß das Ist-Verhalten des Systems nur einmal ermittelt und gelernt werden muß und es müssen nur einmal die richtigen Steuerparameter festgelegt werden. Im Betrieb können ihm dann die optimierten Steuerparameter zugeführt werden und es muß nicht geregelt werden. Weiterhin vorteilhaft an dem erfindungsgemäßen Verfahren ist es, daß hier nicht versucht wird, die Regelung des Systems zu verbessern, sondern daß über die Steuerparameter die Nichtlinearitäten des Systems von denen es nicht erforderlich ist zu wissen welcher Art sie sind, kompensiert werden.

Besonders vorteilhaft ist es als lernfähige Komponenten, neuronale Netze einzusetzen, da es für sie ausreichend Rechnermodelle gibt und da sie in der Lage sind, auch nichtlineares Systemverhalten zu erlernen.

Beim System mit minimalphasigem Verhalten ist es besonders günstig ein inverses Systemmodell zu lernen. In diesem Fall ist das inverse Systemmodell stabil. Der Vorteil besteht darin, daß über das inverse Modell mit der Sollabweichung direkt eine Korrekturgröße für den Eingangssteuerparameter gefunden werden kann.

Bei Systemen, die kein minimalphasiges-Übertragungsverhalten aufweisen, ist es günstig, beim Parameteroptimieren mit zwei identischen Vorwärts-Systemmodellen zu arbeiten. Dabei wird durch Aufbringen einer künstlichen Parameteränderung iterativ die optimierte Korrekturgröße für die Steuerparameter gefunden.

Besonders günstig ist der Einsatz des erfindungsgemäßen Verfahrens bei Roboterarmen, da für Robotersteuerungen und Roboterarme vielfältige Simulationsmodelle verfügbar sind und da durch Einsatz des Verfahrens eine menschliche Tätigkeit automatisiert werden kann.

Günstig kann der Einsatz des erfindungsgemäßen Verfahrens auch für die Ermittlung von optimalen Parametern die Temperaturprofile bewirken sein, denn auch dort ist die optimale Justage zeitaufwendig.

Besonders vorteilhaft kann auch der Einsatz von Sensoren zur Ermittlung des Ist-Verhaltens eines Systems sein, da man direkt Daten erhält, mit denen ein neuronales Netz trainiert werden kann.

Vorteilhaft kann es auch sein, ein neuronales Netz zu verwenden, daß in der Lage ist, lineares Systemverhalten zu lernen, da die Modelle dafür einfacher sind und da auch solche Netze teilweise geeignet sind, Nichtlinearitäten bei der Parameteroptimierung zu kompensieren.

Besonders vorteilhaft ist es neuronale Netze einzusetzen, die auch nichtlineares Übertragungsverhalten des Systems erlernen können. So steht ein inverses stabiles nichtlineares Systemmodell bereit, das bessere Korrekturgrößen für die Steuerparameter ermittelt und damit die Anzahl der Optimierungsschritte für die Steuerparameter reduziert.

Zur Verbesserung der Arbeitsweise des Netzes bietet ein Transformator den neuronalen Netzen aufbereitet diejenigen Werte aus Ist-Verhalten und Steuerparametern an, die zur Beschreibung des Systemverhaltens zu einem Zeitpunkt erforderlich sind.

Alle übrigen Weiterbildungen der Erfindung ergeben sich aus den Figuren und den Unteransprüchen.

Anhand von Figuren wird die Erfindung und ihre Ausführungsbeispiele im folgenden näher erläutert.

Figur 1 zeigt den Lernvorgang an einem Neuron eines neuronalen Netzes, dem verschiedene Eingangsparameter zugeführt werden.

Figur 2 zeigt das Erlernen des inversen Systems.

Figur 3 zeigt das Erlernen des Vorwärtssystems.

Figur 4 zeigt die Parameteroptimierung mit dem inversehen Systemmodell.

Figur 5 zeigt die Parameteroptimierung mit zwei identischen Vorwärts-Systemmodellen.

Figur 6 zeigt verschiedene Schritte bei der Parameteroptimierung mit dem erfindungsgemäßen Verfahren.

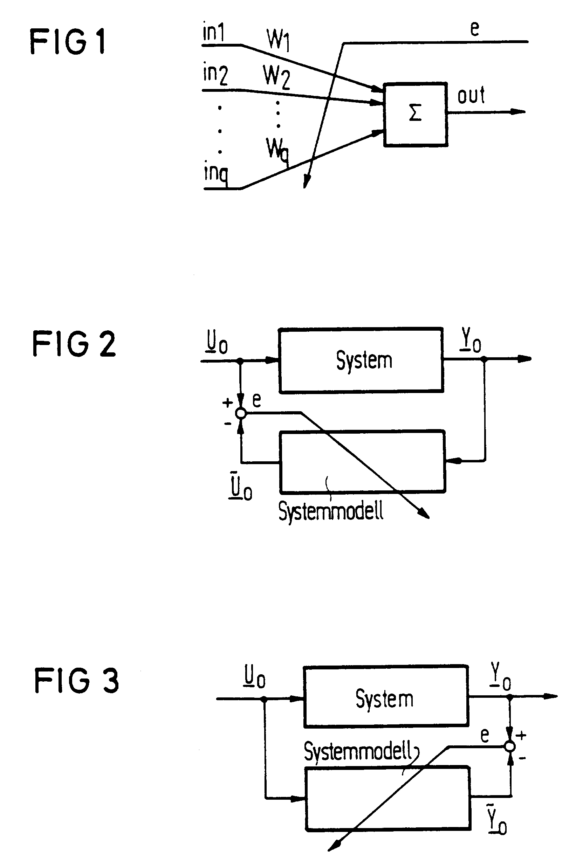

In Figur 1 ist das Neuron eines neuronalen Netzes dargestellt. Es ist mit $\Sigma$ gekennzeichnet. Das Neuron hat q Eingänge $in_1$, $in_2$ bis $in_q$, die mit Pfeilen gekennzeichnet sind und an den jeweiligen Eingängen des Neurons sind Gewichtungsfaktoren $w_1$, $w_2$ bis $w_q$ aufgetragen. Dieses Neuron hat den Ausgang out. Mit e gekennzeichnet, ist der gemessene Fehler zwischen Ist-Verhalten und Soll-Verhalten, die Sollabweichung.

Der Ausgang out wird berechnet mit $out = \underline{w}^T \cdot \underline{in}$. Trainiert wird das Netz mit der Delta-Regel von Widrow-Hoff.

$$\underline{w}^{neu} = \underline{w}^{alt} + \varepsilon \cdot \underline{e}(i) \cdot \frac{\underline{in}}{\left|\underline{in}\right|^2} \quad \text{i zufällig gewählt aus (l...N).}$$

Dabei ist $\underline{e}(i)$ der gemessene Fehler zwischen Ist- und Sollbahn am i-ten Punkt von z.B. einer Robotertrajektorie und $\varepsilon$ die Lernschrittweite. $\varepsilon$ kann bei einem System mit linearen Ubertragungsverhalten auf 1,0 festgehalten werden, um eine schnellstmögliche Konvergenz zu erreichen. Bei einem System mit nichtlinearen Ubertragungsverhalten muß $\varepsilon$ jedoch langsam auf 0 reduziert werden, um die Konvergenz des Systemmodells zu erreichen. Ein lineares inverses Systemmodell kann bei Nichtlinearitäten im System aber sehr leicht instabil und damit ungeeignet für die Parameteroptimierung werden.

Figur 2 zeigt als Beispiel das Erlernen des inversen Systems. Die Eingangsparameter sind hier mit $\underline{u}_0$ bezeichnet und die Ausgangsparameter des Systems mit $\underline{y}_0$. Weiterhin ist die Abweichung e aufgetragen und die Antwort des Systemmodells $\underline{\tilde{u}}_0$. Beim Erlernen des Systems geschieht folgendes: Das System wird mit dem Parameter $\underline{u}_0$ angesteuert und ein Sensor ermittelt als

Systemantwort den Parameter $\underline{y}_0$. Dieser Parameter wird dem Eingang des Systemmodells zugeführt der dem in der Figur 1 beschriebenen Eingang in entspricht.

Das Systemmodell liefert als Antwort auf $\underline{y}_0$ $\underline{\tilde{u}}_0$. An einer Vergleichsstelle wird die Abweichung e zwischen $\underline{\tilde{u}}_0$ und $\underline{u}_0$ ermittelt. Die Gewichtungsfaktoren w am entsprechenden Eingang in, an dem $\underline{y}_0$ zugeführt wird, werden iterativ solange verändert bis e, d.h. die Differenz aus $\underline{\tilde{u}}_0$ und $\underline{u}_0$ möglichst gering wird. Dann ist das Systemmodell erlernt.

In Figur 3 ist das Erlernen des Vorwärtssystems dargestellt. In analoger Weise wie bei Figur 2 wird dem System ein Wert, ein Parameter $\underline{u}_0$ zugeführt, der am Ausgang den Wert $\underline{y}_0$ liefert. Im Unterschied zu Figur 2 wird jedoch dem Systemmodell der gleiche Wert $\underline{u}_0$ zugeführt, der dann am Systemmodell einen Wert $\underline{\tilde{y}}_0$ bewirkt. Die beiden Systemantworten, einmal die des realen Systems $\underline{y}_0$ und zum anderen Mal die des Systemmodells $\underline{y}_0$ werden an einer Vergleichsstelle miteinander verknüpft und ergeben eine Abweichung e. Das Systemmodell wird nun solange trainiert, bis e minimal ist, d.h. die Gewichtungsfaktoren an den Eingängen des neuronalen Netzes, welches das System nachbilden soll, werden in entsprechender Weise angepaßt, wie das in Figur 1 näher erläutert ist.

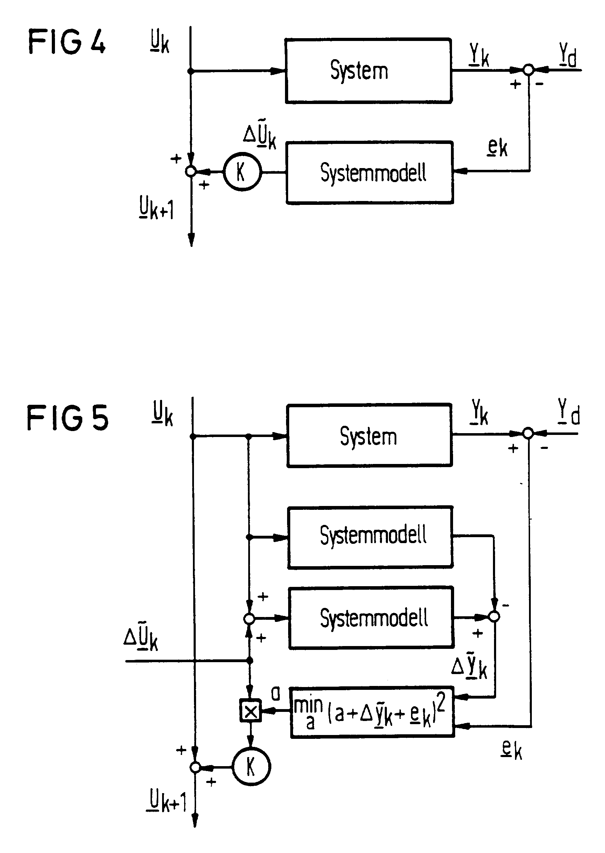

Figur 4 erläutert beispielhaft die Parameteroptimierung mit einem inversen Systemmodell. Nachdem das neuronale Netz in einen stabilen Zustand übergegangen ist, kann es für die Minimierung der Sollabweichung benutzt werden. In diesem Fall ist die Systemantwort mit $\underline{y}_k$ und der gewünschte Sollwert mit $\underline{y}_d$ gekennzeichnet. Dieser Wert $\underline{y}_k$ wird an dem System durch den Parameter $\underline{u}_k$ bewirkt. Der Vergleich von $\underline{y}_k$ und von $\underline{y}_d$ liefert die Sollabweichung $\underline{e}_k$. Diese wird dem Systemmodell zugeführt und liefert analog zu der Sollabweichung $\underline{e}_k$ einen Wert $\Delta\underline{\tilde{u}}_k$. Dieser Wert wird linear mit k gewichtet, um Schwingungen des Regelkreises zu vermeiden und wird dem Eingangswert des Systems dem Eingangsparameter $\underline{u}_k$ zugefügt. Damit wird der Eingangsparameter $\underline{u}_k$ modifiziert. Mit dem neuen Wert $\underline{u}_{k+1}$ wird dann in analoger Weise wie mit $\underline{u}_k$ verfahren. Der iterative Optimierungsvorgang läuft solange ab, bis $\underline{e}_k$ einen zuvor festgelegten Wert unterschreitet.

In Figur 5 ist die Optimierung der Parameter mit zwei identischen Vorwärts-Systemmodellen dargestellt. Das gelernte lineare System wird zweimal verwendet, um die

Antwort $\Delta \tilde{Y}_k$ auf $\Delta \tilde{u}_k$ zu berechnen. Die Minimierung

von $(a \cdot \Delta \tilde{Y}_k + \underline{e}_k)^2$ führt zu einem solchen a, daß durch

Addition von $a \cdot \Delta \tilde{u}_k$ zu $\underline{u}_k$ die Abweichung $\underline{e}_k$ minimiert wird. Die Bezeichnungen werden in dieser Figur analog zur Figur 4 verwendet.

Mit dem ermittelten Wert von a erhält man:

$$\underline{u}_{k+1} = K \cdot a \cdot \Delta \tilde{u}_K + \underline{u}_K$$

$\underline{u}_{k+1}$ führt zu einer kleinen Abweichung $\underline{e}_{k+1}$. Diese Iteration wird in analoger Weise wie bei der Parameteroptimierung mit dem inversen Systemmodell solange durchgeführt, bis $\underline{e}_k$ einen zuvor festgesetzten Wert unterschreitet.

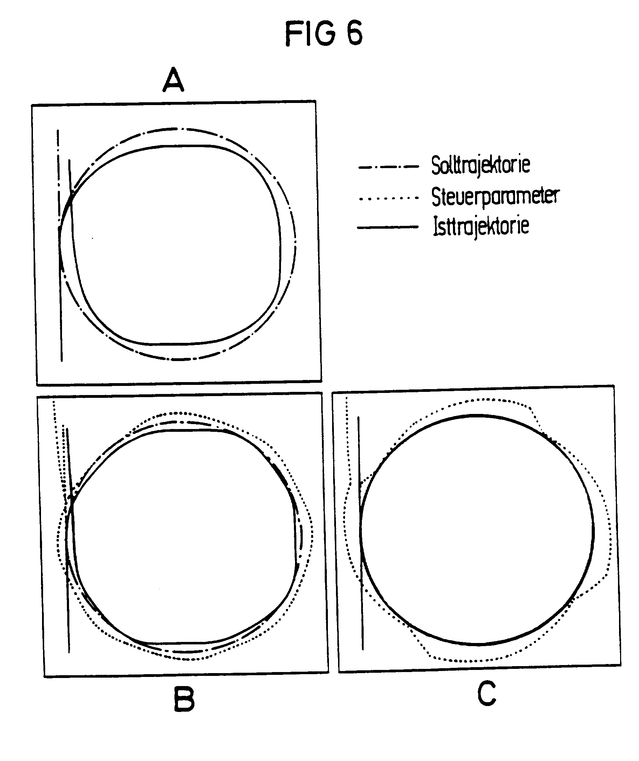

In Figur 6 wird anhand der Solltrajektorie und der Isttrajektorie eines Roboterarms und der zugrundeliegenden Steuerparameter das erfindungsgemäße Verfahren erläutert. Im Teil A ist die Solltrajektorie eines Roboterarmes, d.h. die Steuerparameter in Form von xy-Koordinaten dargestellt und das durch diese Steuerparameter bewirkte Ist-Verhalten des Roboterarmes, welches Dämpfung und Spiel in den Arm-Gelenken berücksichtigt, aufgezeichnet. Diese Figur A kann herangezogen werden, um ein Systemmodell dieses Roboterarmes zu bilden.

Das heißt, das neuronale Netz wird mit den entsprechenden Unterschieden von Soll- una Isttrajektorie trainiert. Das heißt es werden für zufällig gewählte Bahnpunkte der Solltrajektorie Gewichtungsfaktoren in Abhängigkeit der Differenz von Soll- und Istwert der jeweiligen Bahnpunkte gelernt.

In Figur 6B ist die Veränderung der Solltrajektorie dargestellt, nachdem die Steuerparameter einmal mit Hilfe des inversen Systemmodells optimiert wurden. Man kann im Vergleich zum Bild A erkennen, daß sich durch Optimierung der Steuerparameter, die Ist-Trajektorie der Solltrajektorie schon angenähert hat.

In Figur 6C sind die Solltrajektorie und die Isttrajektorie sowie die optimierten Steuerparameter nach 6-maligen Durchlaufen des neuronalen Netzes dargestellt. Man erkennt keinen Unterschied mehr zwischen Soll- und Isttrajektorie und der Iterationsvorgang, der die Steuerparameter optimiert, kann abgebrochen werden.

**Quellen /Ang91/** G.Angermüller,G.Drechsler,P.Kolbenschlag, J.Lindner,K.Moritzen: SMS-Ein 3D-Simulations-system zur Planung und Programmgenerierung von Fertigungsanlagen.In /Wlo91/.

**/Ari84/** S.Arimoto,S.Kawamura and F.Miyazaki: Bettering Operation of Robots by Learning J.of Robotic Systems, Vol.1,No.2, pp.123-140 (1984)

**/Ari84/ -:** Bettering Operation of Dynamic Systems by Learning: A New Control for Servomechanism or Mechatronics Systems. Proc. of 23rd IEEE CDC, Las Vegas(1984)

**/Ari85/ -:** Can Mechanical Robots Learn by Themselves? in H.Hanafusa andH. Inoue (eds.): Robotics Research: The Second International Symposium, pp.127-134,MIT Press (1985)

**/Ari89/** S.Arimoto: in M. Brady (ed); Robotics Sience, pp.349-377 MIT Press (1989)

**/Atk86/** C.G.Atkeson and J.McIntyre: Robot Trajectory Learning through Practice. Proc. of 1986 IEEE Conf.on Robotics and Automation,pp. 1737-1742 (1986)

**/Bal83/** M.Balesdtrino,G.De Maria and Sciavicco: An Adaptive Model Following Control for Robot Manipulators. Trans. ASME J.ofDSMC, Vol. 105,pp.143-151 (1983)

**/Berg91/** J.O.Berg: Robot Calibration for Off-Line Programming. Industrial Robot, Vol.18,No.2, 1991, pp.29-31

**/BMW89/** N.N.:Off-line auf dem Punkt. Roboter,No.4,Sept.1989, pp.28-32

**/Cas84/** G.Casareoand R.Marino:On the Controllability Properties of Elastic Robotos.6 It.Conf.on Analysis and Optimization of Systems INRiA,Nice (1984)

**/Dub79/** S.Dubowsky and D.T.Desforges: The Application of Model Referenced Control for Robot Manipulators.Trans.ASME J.of DSMC, Vol.101,pip.193-200 (1979)

**/Fre82/** E.Freund: Fast Nonlinear Control with Arbitrary Pole-Placement for Industrial Robots and Manipulators. Int.J.Robotics Research, Vol.1,No.1, pp.65-78

**/GaSc90/** F.Garnich,H.Schwarz: Laserrobotic for 3D cutting and welding. Proc.of the European Conference on Optics (ECO III),Den Haag (NL),March 1990

**/Gil83/** E.G.Gilbert andl.J.Ha: An Approach to Nonlinear Feedback Control with Application to Robotics. Proc.22nd IEEE CDC,San Antonio (1983)

**/Hol80/** J.M.Hollerbach: A Recursive Lagrangain Formulation of Manipulator Dynamics and a Comparative Study of Dynamic Formulation Complexity. IEEE Trans. Syst. Man.Cybernet, Vol.SMC-10,pp.730-736 (1980)

**/Hor80/** R.Horowitzand M.Tomizuka: An Adaptive Control Scheme for Mechanical Manipulators - Compensation of Nonlinearity and Decoupling Control. ASME paper 80 WA/DSC-6 (1980)

**/Koi83/** A.J.Koivo and T.H. Guo: Adaptive Linear Controller for Robotic Manipulators.IEEE Trans.an Automatic Control, Vol. AC-28,pp.162-171 (1983)

**/Lei84/** G.Leininger: Adaptive Control of Manipulators Using Self-Tuning Methods.in M.Brady and R.P.Paul (eds.): Robotics Research: First International Symposium, MIT Press (1984)

**/Luh80/** J.Y.S. Luh, M.W. Walker, and P.C.Paul: Online Computation Scheme for Mechanical Manipulators. ASME Trans. J.Dynam. Syst.Measure. Control, Vol. 102, pp.69-76(1980)

**/MET/** N.N.: Consistent Welds Automatically: Description of Meta Torch Sensor Family.Meta Machines Ltd.,Oxford(UK)

**/Mil87/** W.T.Miller III,F.H.Glanz and L.G.Kraft III: Application of General Learning to the Control of Robotic Manipulators. The Int.J.of Robotics Research 6, pp.84-98 (1987)

**/Mil89/** W.T.Miller III: Real-time Application of Neural Networks for Sensor-based Control of Robots with Vision. IEEE Trans.SMC 19,pp. 825-831 (1989)

**/MII90/** W.T.Miller III,R.P.Howes, F.H. Glanz and L.G.Kraft III: Real-time Control of an Industrial Manipulator using a Neural-Network-based Learning Controller. IEEE Trans. Robotics and Automation 6, pp.1-9 (1990)

**/OLD/** N.N.: The Robot's Eye: Seampilot Optical Profile Sensor. OLDELFT product description, OLDELFT Corp. Delft (NL)

**/Pot91/** A.Potthast and T.T.Tio: Schleppfehlerkompensation an CNC-Werkzeugmaschinen mit Sollbahnvorverzerrung. (Track Deviation Compensation for CNC Machine Tools through Feed Forward Control),ZwF86, Carl Hanser Verlag, Munich (1991)

**/Psa87/** D.Psaltis,A.Sideris and A. Yamamura: Neural controllers. Proc.IEEE First Int.Conf.Neural Networks,San Diego, CA,June 21-24,pp.51-558 (1987)

**/Psa88/** D.Psaltis,A.Sideris and A. Yamamura: A Multilayered Neural Network Controller.IEEE Control Systems Magazine 8,pp.17-21 (1988)

**/San91/** V.D.Sanchez A.and G.Hirzinger: State-of-the-art Robot Learning Control based on Artificial Neural Networks-An-Overview-.To appear in: O.Khatib et al. (ed): The Robotics Review2, MIT Press (1991)

**/SFB91/** Proposal and working programm of the SFB 331,19921994. Technical University of Munich,1991 (in German)

**/Spo/86/** M.W.Spong:Modeling and control of Elastic Joint Robots.in F.W.Paul and K.Youcef-Toumi (eds.): Robotics:Theory and Applications, DSC-Vol.3 (presented at the winter Annual Mecting of ASME),pp.57-65 (1986)

**/Wlo91/** D.W.Wloka (Ed): Grundlagen der Robotersimulation. springer,1991

**Patentansprüche**

1. Verfahren zur Erzeugung von Steuerparametern für ein Soll-Verhalten eines Systems, das in Abhängigkeit der Steuerparameter ein Ist-Verhalten aufweist,

a) bei dem in einem ersten Schritt eine lernfähige Komponente ($\Sigma$, Systemmodell) mit dem Ist-Verhalten ($\underline{y}_0$) des Systems (System) geprägt wird,
b) bei dem in einem zweiten Schritt der Unterschied zwischen Soll-Verhalten ($\underline{y}_d$) und Ist-Verhalten ($\underline{y}_k$) des Systems (System), als Soll-Abweichung ($\underline{e}_k$), in Abhängigkeit der Steuerparameter ($\underline{u}_k$) ermittelt wird und mindestens einer mit dem Ist-Verhalten des Systems geprägten lernfähigen Komponente (Systemmodell) zugeführt wird, und diese eine der Soll-Abweichung

($\underline{e}_k$) entsprechende Korrekturgröße ($\Delta\ \widetilde{\underline{u}}_k$) für die Steuerparameter ($\underline{u}_k$) liefert,

c) bei dem in einem dritten Schritt mit Hilfe der Korrekturgröße neue Steuerparameter ($\underline{u}_{k+1}$) so ermittelt werden, daß sie eine Verbesserung des Ist-Verhaltens ($\underline{y}_k$) in Bezug auf das Soll-Verhalten ($\underline{y}_d$) des Systems bewirken, und

d) bei dem mindestens die Schritte 2 und 3 solange durchgeführt werden, bis der Unterschied zwischen Soll- und Ist-Verhalten des Systems ($\underline{e}_k$) einen vorgegebenen Wert unterschreitet.

2. Verfahren nach Anspruch 1, bei dem die lernfähige Komponente (Systemmodell) ein neuronales Netz ist, das geprägt wird, indem zur Nachbildung des Ist-Verhaltens ($\underline{y}_0$) mindestens ein Steuerparameter (in) an mindestens einem Neuron ($\Sigma$) gewichtet wird.

3. Verfahren nach Anspruch 2, bei dem das neuronale Netz (Systemmodell) lineares Verhalten eines Systems lernt.

4. Verfahren nach Anspruch 2, bei dem das neuronale Netz (Systemmodell) nichtlineares Verhalten eines Systems lernt, indem die zum Erlernen des Systems zugeführten Steuerparameter kodiert werden.

5. Verfahren nach Anspruch 2, bei dem ein Transformator mindestens einem Neuron eine Untermenge der aus dem Ist-Verhalten bekannten Steuerparameter für das Lernen des Systemverhaltens zuordnet.

6. Verfahren nach einem der Ansprüche 1 bis 5, bei dem das System mindestens minimalphasiges Verhalten aufweist, bei dem die lernfähige Komponente (Systemmodell) so geprägt wird, daß sie in der Lage ist aus dem Ist-Verhalten des Systems ($\underline{y}_0$) die zugehörigen Steuerparameter ($\underline{u}_0$) zu ermitteln und bei dem aus der Soll-Abweichung ($\underline{e}_k$) eine Steuerparameter-Abweichung ($\Delta\ \widetilde{\underline{u}}_k$) ermittelt wird, die mit den Steuerparametern ($\underline{u}_k$) verknüpft wird, welche diese Soll-Abweichung ($\underline{e}_k$) bewirkt haben.

7. Verfahren nach einem der Ansprüche 1 bis 5, bei dem zwei identisch geprägte lernfähige Komponenten (Systemmodell), Modelle Verwendung finden, wobei ein Modell dieselben Steuerparameter wie das System ($U_{k-1}$) erhält und das andere Modell (um $\Delta\ \widetilde{\underline{u}}_k$) veränderte Steuerparameter erhält und man durch Vergleich der bewirkten Ist-Verhalten der zwei Modelle eine Abweichung ($\Delta\ \widetilde{\underline{Y}}_k$) erhält, die der Veränderung der Steuerparameter am zweiten Modell entspricht, bei dem die Veränderung iterativ so angepaßt wird, daß das Quadrat der Summe aus der vom System bewirkten Soll-Abweichung ($\underline{e}_k$) und einer Linearkombination der von den Modellen bewirkten Abweichung ($\Delta\ \widetilde{\underline{Y}}_k$) minimal wird und die so gefundene Veränderung der Steuerparameter ($\Delta\ \widetilde{\underline{u}}_k$) mit denjenigen Steuerparametern ($\underline{u}_k$) verknüpft wird, die die Soll-Abweichung ($\underline{e}_k$) des Systems bewirkt haben.

8. Verfahren nach einem der Ansprüche 1 bis 7, bei dem das System ein Roboterarm ist, der ein Werkzeug führt und die Steuerparameter ($\underline{u}_k$) Koordinaten-Vorgaben sind, die in einer Trajektorie enthalten sein sollen, entlang welcher der Roboter das Werkzeug führen soll und in dem das Ist-Verhalten des Systems durch die Trajektorie beschrieben wird, entlang der der Roboterarm das Werkzeug tatsächlich führt.

9. Verfahren nach einem der Ansprüche 1 bis 7, bei dem das System ein Heizsystem darstellt und die Steuerparameter ($\underline{u}_k$) Temperaturprofil vorgeben mit dem Heizgut beheizt werden soll und in dem das Ist-Verhalten durch den tatsächlichen Temperatur Zeit-Verlauf des Heizgutes beschrieben wird.

10. Verfahren nach einem der Ansprüche 1 bis 9, bei dem das Ist-Verhalten ($\underline{y}_d$) des Systems durch Sensoren ermittelt wird.

**Claims**

1. Process for generating control parameters for a reference behaviour of a system having an actual behaviour depending on the control parameters,

a) wherein in a first step a trainable component ($\varepsilon$ system model) is taught the actual behaviour ($\underline{y}_o$) of the system (system),

b) wherein in a second step the difference between reference behaviour ($\underline{y}_d$) and actual behaviour ($\underline{y}_k$) of the system (system), as reference deviation ($\underline{e}_k$), is determined as a function of the control parameters ($\underline{u}_k$) and is supplied to at least one trainable component (system model) to which the actual behaviour of the system has been taught, and said component pro-

vides a correction value ($\Delta \tilde{\underline{u}}_k$) for the control parameters ($\underline{u}_k$) corresponding to the reference deviation ($\underline{e}_k$),

c) wherein in a third step new control parameters ($\underline{u}_{k+1}$) are determined with the aid of the correction value in such a way that they bring about an improvement of the actual behaviour ($\underline{y}_k$) with respect to the reference behaviour ($\underline{y}_d$) of the system, and

d) wherein at least the steps 2 and 3 are performed until the difference between reference behaviour and actual behaviour of the system ($\underline{e}_k$) falls below a predetermined value.

2. Process according to Claim 1, wherein the trainable component (system model) is a neural network which is taught, in that, for simulating the actual behaviour ($\underline{y}_o$), at least one control parameter (in) is weighted at at least one neuron ($\varepsilon$).

3. Process according to Claim 2, wherein the neural network (system model) learns linear behaviour of a system.

4. Process according to Claim 2, wherein the neural network (system model) learns nonlinear behaviour of a system in that the control parameters supplied for training the system are coded.

5. Process according to Claim 2, wherein a transformer assigns to at least one neuron a subset of the control parameters known from the actual behaviour for learning the system behaviour.

6. Process according to one of Claims 1 to 5, wherein the system has at least minimum-phase behaviour, wherein the trainable component (system model) is taught in such a way that it is capable of determining the associated control parameters ($\underline{u}_o$) from the actual behaviour of the system ($\underline{y}_o$), and wherein a control parameter deviation ($\Delta \tilde{\underline{u}}_k$) is determined from the reference deviation ($\underline{e}_k$) which is combined with the control parameters ($\underline{u}_k$) that brought about said reference deviation ($\underline{e}_k$).

7. Process according to one of Claims 1 to 5, wherein two identically taught trainable components (system model) are used as models, wherein one model receives the same control parameter as the system ($U_{k-1}$) and the other model receives modified (by $\Delta \tilde{\underline{u}}_k$) control parameters, and a deviation ($\Delta \tilde{\underline{y}}_k$) is obtained by comparing the actual behaviour of the two models brought about, which deviation corresponds to the modification of the control parameters on the second model, wherein the modification is adapted iteratively in such a way that the square of the sum of the reference deviation ($\underline{e}_k$) brought about by the system and a linear combination of the deviation ($\Delta \tilde{\underline{y}}_k$) brought about by the models becomes minimal, and the modification of the control parameters ($\Delta \tilde{\underline{u}}_k$) found in this way is combined with the particular control parameters ($\underline{U}_k$) that brought about the reference deviation ($\underline{e}_k$) of the system.

8. Process according to one of Claims 1 to 7, wherein the system is a robot arm that guides a tool, and the control parameters ($\underline{u}_k$) are coordinate specifications which are to be included in a trajectory along which the robot is to guide the tool, and wherein the actual behaviour of the system is described by the trajectory along which the robot arm actually guides the tool.

9. Process according to one of Claims 1 to 7, wherein the system represents a heating system and the control parameters ($\underline{u}_k$) specify a temperature profile with which the heated material is to be heated, and wherein the actual behaviour is described by the actual temperature waveform of the heated material.

10. Process according to one of Claims 1 to 9, wherein the actual behaviour ($\underline{y}_d$) of the system is determined by sensors.

**Revendications**

1. Procédé de génération de paramètres de commande pour un comportement de consigne d'un système ayant un comportement réel dépendant des paramètres de commande,

a) dans lequel, dans une première étape, un composant adaptatif ($\Sigma$, modèle de système) est imprégné du comportement réel ($\underline{y}_o$) du système (système),

b) dans lequel, dans une seconde étape, la différence entre le comportement de consigne ($\underline{y}_d$) et le comportement réel ($\underline{y}_k$) du système (système) est déterminée comme écart de consigne ($\underline{e}_k$), en fonction des paramètres de commande ($\underline{u}_k$) et transmise au moins à une composante adaptative (modèle du système) empreinte du comportement réel du système et dans lequel celle-ci livre une grandeur de correction ($\Delta \tilde{\underline{u}}_k$)

correspondant à l'écart de consigne ($\underline{e}_k$) pour les paramètres de commande ($\underline{U}_k$),

c) dans lequel, dans une troisième étape, de nouveaux paramètres de commande ($\underline{U}_{k+l}$) sont déterminés à l'aide de la grandeur correctrice, si bien qu'ils entraînent une amélioration du comportement réel ($\underline{y}_k$) en rapport avec le comportement de consigne ($\underline{y}_d$) du système, et

d) dans lequel, au moins les étapes 2 et 3 sont répétées jusqu'à ce que la différence entre le comportement de consigne et le comportement réel du système ($\underline{e}_k$) reste inférieure à une valeur prédéfinie.

2. Procédé selon la revendication 1, dans lequel la composante adaptative (modèle du système) est un réseau neuronal, imprégné, en ce sens qu'au moins un paramètre de commande (in) est pondéré sur au moins un neurone ($\Sigma$) pour simuler le comportement réel ($\underline{y}_o$).

3. Procédé selon la revendication 2, dans lequel le réseau neuronal (modèle du système) apprend le comportement linéaire d'un système.

4. Procédé selon la revendication 2, dans lequel le réseau neuronal (modèle du système) apprend le comportement non-linéaire d'un système, par codage des paramètres de commande transmis pour l'apprentissage du système.

5. Procédé selon la revendication 2, dans lequel un transformateur affecte à au moins un neurone un sous-ensemble des paramètres de commande connus du comportement réel pour l'apprentissage du comportement du système.

6. Procédé selon l'une des revendications 1 à 5, dans lequel le système présente au moins un comportement à déphasage minimal, dans lequel la composante adaptative (modèle du système) est empreinte de telle sorte qu'elle est en mesure de déterminer les paramètres de commande ($\underline{u}_o$) afférents à partir du comportement réel du système ($\underline{y}_o$), et dans lequel un écart des paramètres de commande ($\Delta\widetilde{\underline{U}}_k$) est déterminé à partir de l'écart de consigne ($\underline{e}_k$), lequel écart est associé aux paramètres de commande ($\underline{u}_k$) qui ont produit cet écart de consigne ($\underline{e}_k$).

7. Procédé selon l'une des revendications 1 à 5, dans lequel deux composantes adaptatives (modèle du système) empreintes de manière identique, des modèles, sont utilisés, un modèle recevant les mêmes paramètres de commande que le système ($U_{k-1}$) et l'autre modèle recevant des paramètres de commande modifiés (de $\Delta\widetilde{\underline{U}}_k$) et dans lequel on obtient un écart ($\Delta\widetilde{\underline{y}}_k$) en comparant les comportements réels produits des deux modèles, qui correspond à la variation des paramètres de commande du deuxième modèle, pour lequel la modification sera adaptée par itération de sorte que le carré de la somme de l'écart de consigne ($\underline{e}_k$) produit par le système et une combinaison linéaire de l'écart ($\Delta\widetilde{\underline{y}}_k$) produit par les modèles, sera minimal et dans lequel la modification des paramètres de commande ($\Delta\widetilde{\underline{u}}_k$) ainsi trouvée est associée aux paramètres de commande ($\underline{U}_k$), qui ont entraîné l'écart de consigne ($\underline{e}_k$) du système.

8. Procédé selon l'une des revendications 1 à 7, dans lequel le système est un bras du robot qui guide un outil et les paramètres de commande ($\underline{u}_k$) sont des coordonnées prédéfinies qui doivent être contenues dans une trajectoire, le long de laquelle le robot doit guider l'outil et dans laquelle le comportement réel du système est décrit par la trajectoire le long de laquelle le bras du robot guide effectivement l'outil.

9. Procédé selon l'une des revendications 1 à 7, dans lequel le système constitue un système de chauffage et les paramètres de commande ($\underline{u}_k$) prédéfinissent un profil de température avec lequel un produit à chauffer doit être chauffé et dans lequel le comportement réel est décrit par la courbe réelle température/temps du produit à chauffer.

10. Procédé selon l'une des revendications 1 à 9, dans lequel le comportement réel ($\underline{y}_d$) du système est déterminé par des capteurs.

FIG 1

FIG 2

FIG 3

FIG 4

FIG 5

# FIG 6

A

— · — · — Solltrajektorie
· · · · · · · · Steuerparameter
————— Isttrajektorie

B

C